# EUROPEAN PATENT APPLICATION

(11) **EP 4 180 659 A1**
(43) Date of publication of application: **17.05.2023**
(21) Application number: 21208524.5
(22) Date of filing: 16.11.2021
(51) Int. Cl.: F03D 80/80, F03D 13/40

(54) **A NACELLE FOR A WIND TURBINE**

(71) Applicant: VESTAS WIND SYSTEMS A/S, 8200 Aarhus N (DK)
(72) Inventor: NISSEN, Christian Floe, Silkeborg (DK); LAUSTEN, René, Tilst (DK)
(74) Representative: Vestas Patents Department

(57) **Abstract**

The invention relates to a wind turbine nacelle (2) configured for mounting on a wind turbine tower (3) and housing a rotor-supporting assembly supporting a rotor, the nacelle further housing a power conversion assembly, the nacelle comprising:
- a main unit (20, 101) arranged to be connected to the wind turbine tower (3) and housing the rotor-supporting assembly, and
- at least one auxiliary unit (21, 22, 102) housing an operative component (34, 35, 104) forming part of the power conversion assembly,
wherein the main unit (20, 101) and the auxiliary unit (21, 22, 102) are separate units configured to be connected by a unit fixation structure at an interface, and
wherein the at least one auxiliary unit has a first height in an assembled configuration and a second height in a transportation configuration, the first height being higher than the second height.

## Description

### INTRODUCTION

The present invention relates to a nacelle for a wind turbine. The nacelle comprises a main unit and at least one auxiliary unit mounted on a side of the main unit, the at least one auxiliary unit comprises an assembled configuration and a transportation configuration. The invention further relates to a transport method for such a nacelle.

### BACKGROUND

Wind turbines increase in size in terms of nominal power output as well as in terms of physical dimensions of the individual parts of the wind turbine. Therefore, the size of the nacelle must also be increased to accommodate the required wind turbine components. For this reason, for instance in WO2021/098927A1, it has been suggested to split the nacelle into separate units, such that at least some of the units may be transported as standard shipping freight containers.

It has shown that due to the large sizes of some individual wind turbine components, these do not fit inside the dimensions of standard shipping freight containers, and as such it has until now been impossible for these cases to stay within the required transport dimensions.

### SUMMARY

It is an object of embodiments of the disclosure to facilitate further modularity, ease of design and manufacturing and allow for improved maintenance of wind turbines. It is a further object of embodiments of the disclosure to provide a nacelle which is transportable using ordinary transport means and to lower transportation and handling costs without limiting the possible size of the nacelle.

The invention relates to a wind turbine nacelle configured for mounting on a wind turbine tower and housing a rotor-supporting assembly supporting a rotor, the nacelle further housing a power conversion assembly, the nacelle comprising:
- a main unit arranged to be connected to the wind turbine tower and housing the rotor-supporting assembly, and
- at least one auxiliary unit housing an operative component forming part of the power conversion assembly,

wherein the main unit and the auxiliary unit are separate units configured to be connected by a unit fixation structure at an interface, and
wherein the at least one auxiliary unit has a first height in an assembled configuration and a second height in a transportation configuration, the first height being higher than the second height.

The auxiliary unit may advantageously, in the transportation configuration, be formed with size and shape comparable to, or equal to, the size and shape of a shipping freight container. The unit thereby inherits the advantages of shipping freight containers with respect to handling, transportation, and storage. Shipping freight containers can for example be handled anywhere in the world by ship, train, and truck etc. and at lower costs compared to bulk transport.

The cost savings are even more pronounced when the auxiliary unit is a shipping freight container. A shipping freight container is also referred to as an intermodal container, a standard freight container, a box container, a sea freight container, or an ISO container, and refers in general to a container used to store and move materials and products in the global containerized intermodal freight transport system for intercontinental traffic. The shipping freight container follows the dimensional and structural specifications in the ISO standard of ISO 668:2013 for series 1 freight containers, including various lengths and various heights (including high cube), as defined in the ISO standard.

The main unit may, depending on the type of wind turbine, comprise further parts, e.g. a gear box, a bearing system and different kinds of peripheral equipment, e.g. for lubrication, cooling, and control purpose. The main unit may particularly comprise a main frame forming part of the rotor-supporting assembly and forming a load path from the rotor into the tower or intermediate tower structure, e.g. via a yawing arrangement. The main frame may particularly be a casted component. In addition to the main frame, the rotor-supporting assembly may comprise e.g. a bearing structure and other components supporting the rotor in the wind turbine.

In an embodiment of the invention, said at least one auxiliary unit comprises a bottom face, four side faces together defining a space, each of said four side faces having an upper part defining in combination a top perimeter; and a roof part, wherein the roof part in the transportation configuration is connected to at least part of said top perimeter in order to cover at least part of said space.

In an embodiment of the invention, in the assembled configuration, a roof extension frame is mounted between said top perimeter and said roof part; said roof extension frame being dismounted in the transportation configuration.

In an embodiment of the invention, in the assembled configuration, a roof extension frame is mounted between said top perimeter and said bottom face; said roof extension frame being dismounted in the transportation configuration.

In one embodiment, the roof extension frame may be positioned between the bottom face and the lower part of the four side faces. In another embodiment, the roof extension frame may be positioned somewhere along the height of the side faces, meaning that the side faces would be adapted to be split into two. Hereby the interfaces from the side faces to the roof part and the bottom face, respectively, will be left undisturbed.

The connection of the roof extension frame to the other elements, i.e. the bottom face, the sides faces or the roof part, can be done by any known connection means, i.e. welding, bolting or using latches.

In an embodiment of the invention, in the transportation configuration, a roof extension frame is positioned inside the auxiliary unit in separate extension plates.

When the roof extension frame can be split into segments and transported inside the auxiliary unit, a single container transport can onsite be transferred into a larger volume inside the auxiliary unit for use.

In an embodiment of the invention, said roof extension frame comprises at least two side extension plates and two end extension plates, and where at least two of these extension plates are welded or bolted together.

In further embodiments, the connection could be done otherwise as well, such as using latches to fixation the elements.

In other embodiments, the roof extension frame could be split into segments along other split lines, for instance resulting in at least one L-shaped segment. The full roof extension frame could for example be split into four identical L-shaped segments, potentially resulting in stronger corners. Alternatively, four L-shaped segments plus an additional straight segment along each side.

In an embodiment of the invention, each of said side extension plates comprises at least two segments, such as at least three segments.

In an embodiment of the invention, said roof extension frame has a height of at least 20cm, such as at least 40cm or at least 60cm.

In an embodiment of the invention, said nacelle comprises a main unit and at least two auxiliary units.

In an embodiment of the invention, the main unit and the at least one auxiliary unit are arranged side by side in a direction away from a rotational axis defined by the rotor-supporting assembly.

In an embodiment of the invention, the operative component is at least one of a power conversion assembly, a transformer, or a converter.

In an embodiment of the invention, said power conversion assembly may involve conversion of electrical power into an energy carrier, such as hydrogen, ethanol, ammonia, or a liquid organic hydrogen carrier (LOHC).

In an embodiment of the invention the operative component may be an electrolysis cell stack or a battery. In a further embodiment of the invention, the operative component may be a transformer and a converter housed in the same auxiliary unit.

Furthermore, the invention relates to an installation method comprising the steps of providing a main unit, providing at least one auxiliary unit, shifting the configuration of said at least one auxiliary unit between a transportation configuration and an assembled configuration, and connecting the at least one auxiliary unit to the main unit.

In an embodiment of the invention, said step of connecting the at least one auxiliary unit to the main unit is after said step of shifting the configuration.

In an embodiment of the invention, said step of connecting the at least one auxiliary unit to the main unit is performed on-site.

By carrying out the connecting on the site of installation of the wind turbine, the transportation costs may be lower. More transports will be needed, but each of them will be much lower.

In an embodiment of the invention, said method further comprises the step of moving extension plates of a roof extension frame into or out from the at least one auxiliary unit.

### BRIEF DESCRIPTION OF THE DRAWINGS

In the following, embodiments of the disclosure will be described in further details with reference to the drawing in which:
Figs. 1a and 1b illustrate wind turbines;
Fig. 2 illustrates the nacelle of a wind turbine;
Fig. 3 illustrates a perspective view of the nacelle of Fig. 2;
Fig. 4 illustrates the nacelle from Fig. 3 but seen from above;
Fig. 5 illustrates an embodiment where the left and right-side auxiliary units contain identical components;
Fig. 6 illustrates an embodiment in which a transportation configuration may not be needed;
Fig. 7 illustrates a close-up of part of fig. 6;
Figs. 8a, 8b, 9a, and 9b schematically illustrate the preparation of the assembled configuration vs.
the preparation of the transportation configuration;
Fig. 10 illustrates an extension frame according to an embodiment;
Fig. 11 illustrates an extension frame according to an embodiment in segments;
Fig. 12 illustrates a close-up of a corner of an extension frame according to an embodiment; and
Fig. 13 illustrates the packaging of an extension frame in segments according to an embodiment.

### DETAILED DESCRIPTION OF INVENTION

The detailed description and specific examples, while indicating embodiments, are given by way of illustration only, since various changes and modifications within the spirit and scope of this disclosure will become apparent to those skilled in the art from this detailed description.

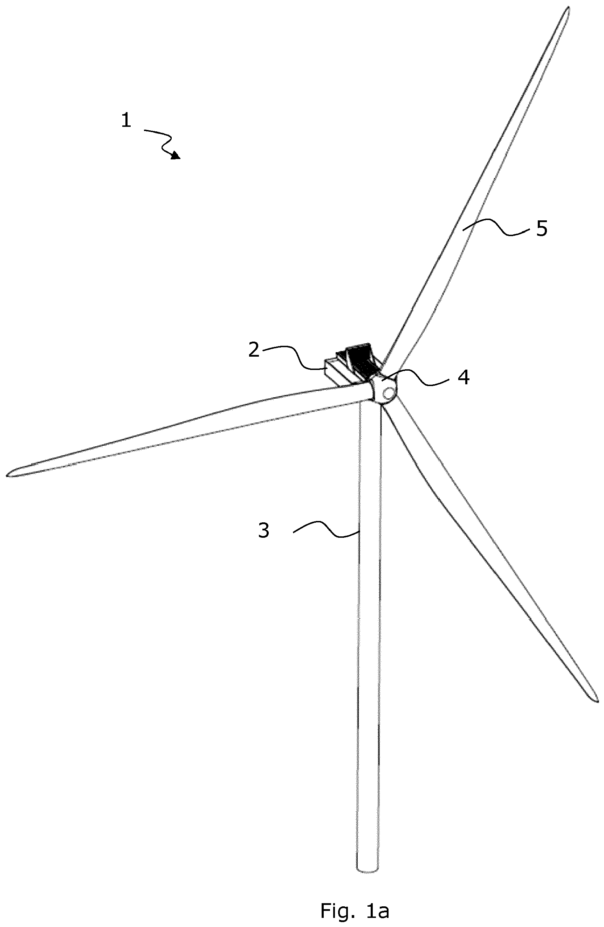

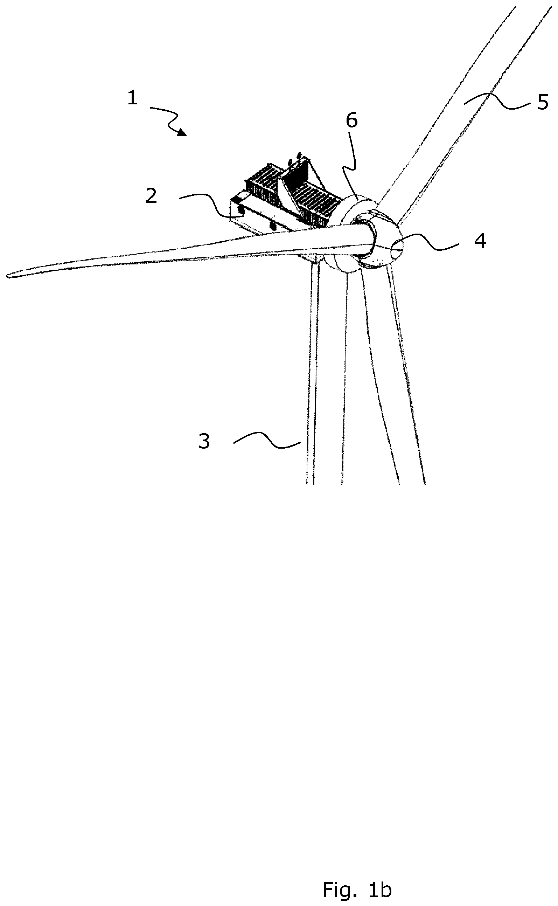

Figs. 1a and 1b illustrate wind turbines 1 with a nacelle 2 mounted on a tower 3. A hub 4 carrying three rotor blades 5 forms a rotor and is carried by a rotor-supporting assembly in the nacelle 2. Typically, the rotor-supporting assembly comprises a rotor shaft connecting a gear arrangement and a generator to the hub. A gear is, however, not always required since the generator could be directly driven by the shaft. Fig. 1b illustrates a direct drive wind turbine with the generator 6 located outside the nacelle.

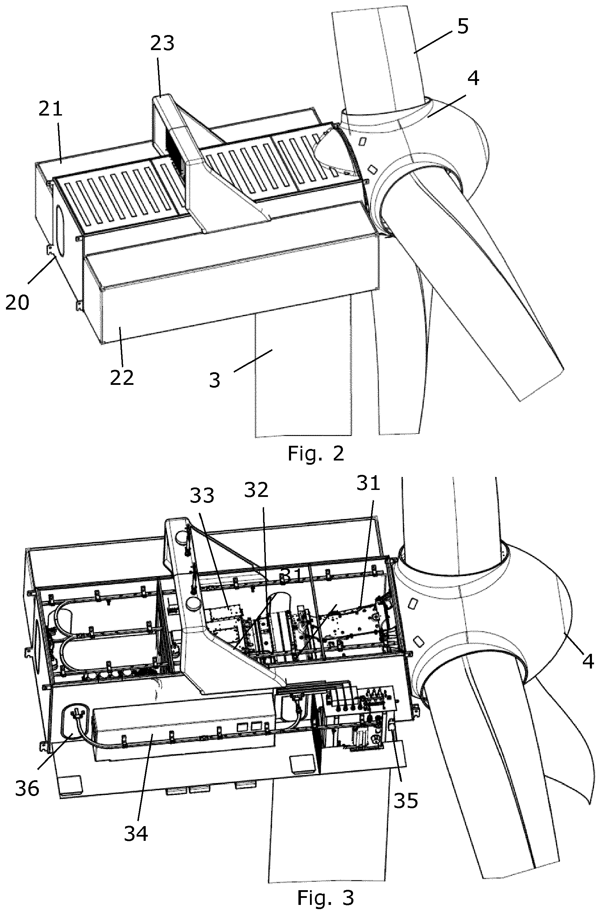

Fig 2 illustrates that the nacelle comprises a main unit 20 and two auxiliary units 21, 22. A cooling area 23 is arranged on top of the nacelle. The cooling area is formed by a heat exchanger which may form part of the main unit, and/or any of the auxiliary units. The main unit 20 is mounted on the tower 3 via a yawing arrangement (not shown), allowing the nacelle 2 to rotate in order to direct the rotor into the wind.

Fig. 3 illustrates a perspective view of the nacelle 2 of Fig. 2. In Fig. 3 the outer walls of the nacelle 2 are (for the sake of explanation) transparent, thereby revealing the interior parts of the nacelle 2 and the wind turbine components accommodated therein. The main unit 20 accommodates a main bearing unit 31 supporting a main shaft for rotation therein, a gear arrangement 32 and a generator 33, arranged sequentially behind the hub 4, along a direction defined by the rotational axis of the hub 4. The components in the main unit primarily form part of the drivetrain.

The auxiliary unit 22 accommodates a transformer unit 34, and a converter unit 35 which herein constitute two different operative components being accommodated in the auxiliary unit but carried by the main unit. In alternative embodiments, the operative component could be a power conversion assembly such as an electrolysis cell stack, a battery.

Each auxiliary unit 21, 22 is mounted along a side of the main unit 20 by a unit fixation structure. In the disclosed embodiment, they are mounted in such a manner that one auxiliary unit 21 is mounted along a right side of the main unit 20 and the other auxiliary unit 22 is mounted along a left side of the main unit 20, as seen in a direction along a rotational axis of the hub 4 from the hub 4 towards a rear wall of the main unit 20.

The main unit and the auxiliary units are enclosed and optionally sealable units such that one compartment is formed by the auxiliary unit, defining an auxiliary space and another compartment is formed by the main unit, defining a main space. That allows the drivetrain to be isolated from the converter and transformer. The two compartments may be joined by the cooperating openings 36 allowing personnel and equipment to enter from the main space in the main unit into the auxiliary space in the auxiliary unit. The openings 36 may be sealed and thereby prevent fire etc. from spreading from one of the main and auxiliary unit to the other one of the main and auxiliary unit.

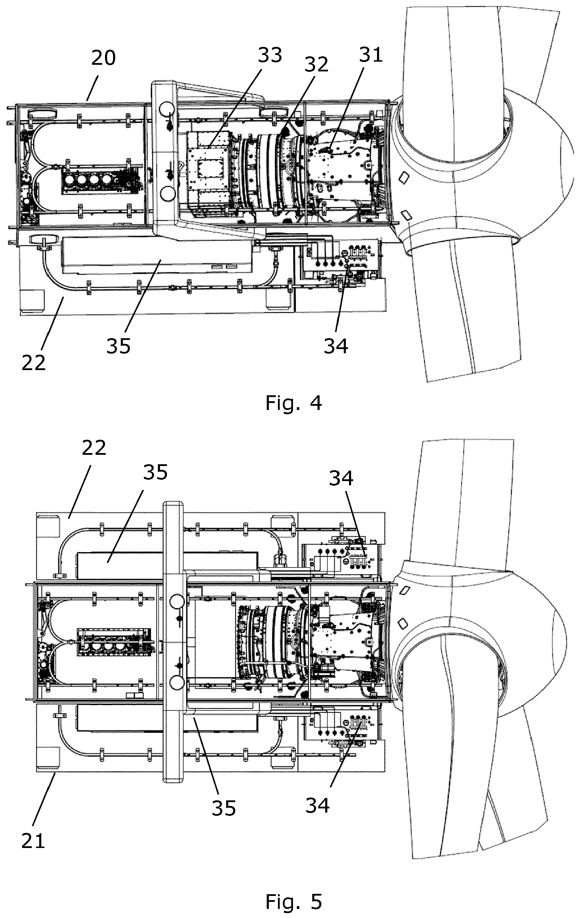

Fig. 4 illustrates a nacelle seen from above.

Fig. 5 illustrates an embodiment where the left and right-side auxiliary units contain at least one identical component establishing a weight balance and a double function. The double function means that the wind turbine comprises two similarly functioning components, one contained in each of the auxiliary units. The components may be identical in nature and specification. In case of component failure of one unit, the wind turbine may continue operation on reduced power while the operative component in the other auxiliary unit is replaced.

In Figs. 2-5, the auxiliary units are constituted by elements having generally the shape and size of standardised freight containers such as a 40-foot shipping freight containers having a dimension and structural specifications as provided by the ISO standard, ISO 668:2013 for series 1 freight containers. The auxiliary units are attached to the main unit by the ISO-corner lifting structure, typically moulded in steel and constituting a particularly strong interface to the container.

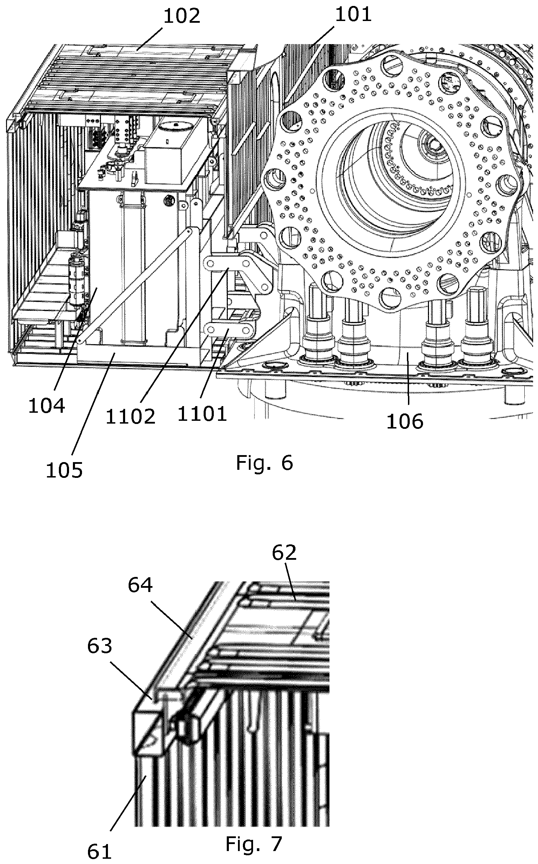

Fig. 6 illustrates the main unit 101 and the auxiliary unit 102 joined by the unit fixation structure making use of the stronger corner lifting points of the container which constitutes the auxiliary unit 102.

The transformer 104 is carried by a support frame 105 resting on the bottom of the auxiliary unit 102 and it is suspended directly on the main frame 106 inside the main unit 101. The main frame thereby forms part of the load path for the operative component into the tower.

As there are many different wind turbine models, it will also be interesting to be able to use the shown set-up with different sizes of transformers. In the shown figure, the transformer 104 is of a size, where it can be accommodated within the height of the standard container (here 102). However, in cases where a larger (in particular higher) transformer is a needed for a wind turbine, until now it has not been able to combine this with achieving the benefits of using standard shipping freight containers.

An auxiliary unit 102 will typically comprise a bottom face and four side faces together defining a space, on top of which a roof can be placed. A typical example of this is indeed a standard shipping freight container. When needed, such containers are provided with a removable roof, which rests on a top perimeter established by the four side faces.

Fig. 7 is a close-up of the left side of the top section of the auxiliary unit 102 in fig. 6. Here a side face 61 can be seen as well as the roof part 62. The upper part 63 of the side face 61 is shown and it is seen that the side part 64 of the roof part 62 is resting on top of the upper part 63. Hereby, the roof part 62 can be removed when needed and re-installed when needed.

The central part of the present invention is to provide an auxiliary unit which has two configurations with two heights, namely a first height in an assembled configuration and a second height in an transportation configuration, the first height being higher than the second height. Hereby, in the transportation configuration all benefits can be achieved regarding the use of standard shipping freight containers. Once the auxiliary unit then arrives to the desired destination, typically the installation site, the auxiliary unit can be converted into an assembled configuration, where the height is increased to enable sufficient space inside the auxiliary unit, as needed.

In some cases, the component needing additional space/height may not be possible to transport together with the auxiliary unit, but a plurality of such components may then be gathered into only one special transport instead of requiring this for each individual transport of auxiliary units.

In other cases, the reason why additional space/height is needed may be simply heat radiation or the like which requires a safety distance when the wind turbine is in production mode, but where this additional space is not mandatory during transport.

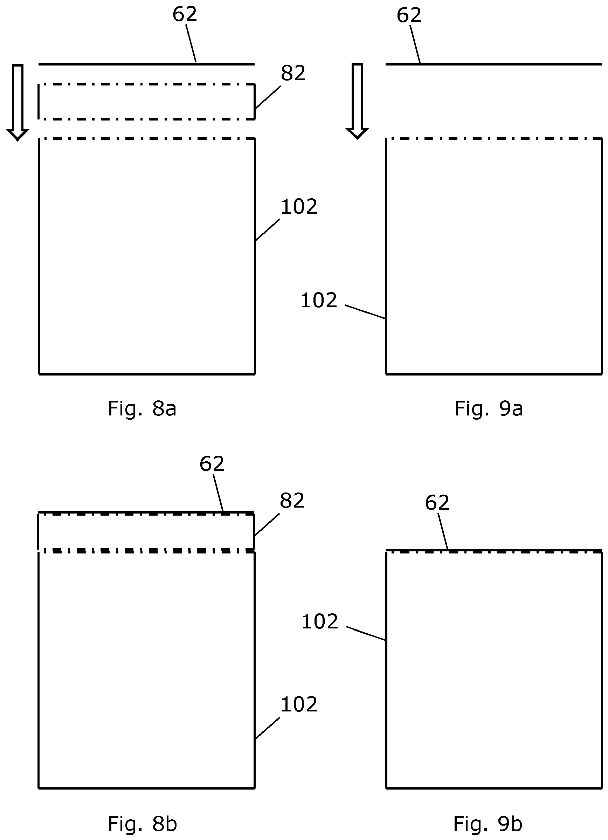

Figs. 8a and 8b show schematically the installation of the roof part 62 on the roof extension frame 82, and further the installation of the roof extension frame 82 on the auxiliary unit 102, thereby creating the assembled configuration.

Figs. 9a and 9b for comparison show schematically the installation of the roof part 62 on the auxiliary unit 102, thereby creating the transportation configuration.

For both configurations, the interface between roof part 62 and extension frame 82, between extension frame 82 and auxiliary unit 102, or between roof part 62 and auxiliary unit 102 may be similar to as shown in fig. 7, or the interfaces may be different. For instance, the connection may be with vertical supporting flanges on the inside (as shown in fig. 8), or with vertical supporting flanges on the outside.

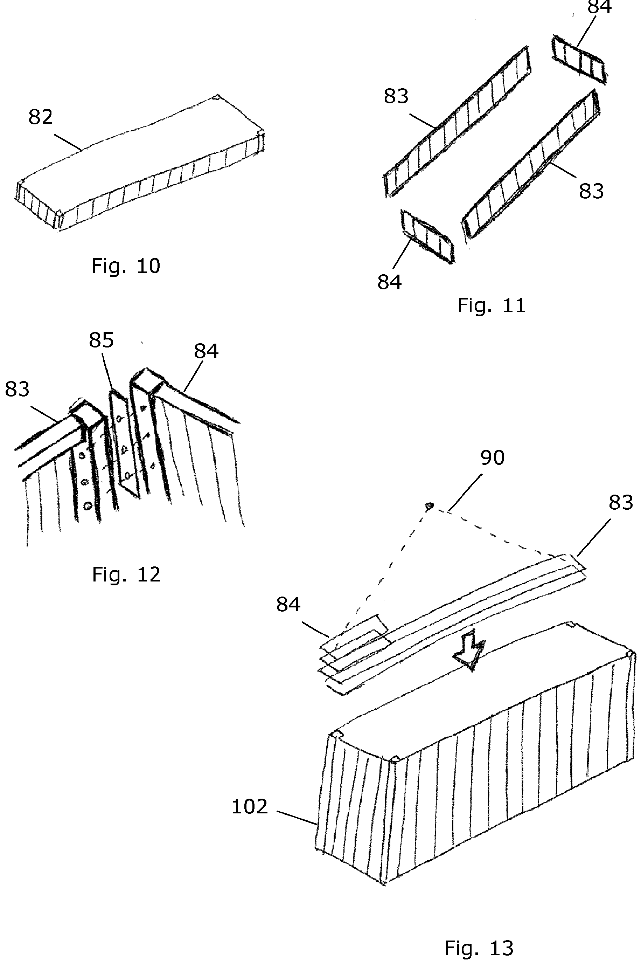

Fig. 10 shows an example of an extension frame 82. As part of the invention, this extension frame 82 may be one single welded element. However, advantageously it may be split into a plurality of individual segments in order to facilitate easier transportation of the extension frame.

Fig. 11 shows an example, where the extension frame 82 is split into four individual extension frame segments, two side extension plates 83 and two end extension plates 84.

Fig. 12 shows a close-up of a possible connection between two extension frame segments 83 and 84. In between these are shown a sealing element 85 which may serve various purposes, but primarily ensuring that even in harsh weather no water will enter inside the auxiliary unit through the connection. Further fig. 12 indicates bolt holes, through which bolts may be used to gather and tighten the extension frame segments.

In alternative embodiments, the connection may be carried out otherwise, for instance separate corner elements may be used, to which both a side extension plate 83 and an end extension plate 84 may be connected. In such embodiment, more strength may be built into the corner elements, as needed.

Fig. 13 shows a schematic and simplified embodiment where the extension frame segments 83/84 have been stacked and are lifted by lifting means 90 to be stored inside the auxiliary unit 102 during transport. This means that after also mounting the roof part 62, the auxiliary unit 102 is in a transportation configuration, but with all elements inside to be prepared to go into the assembled configuration, once the intended destination has been reached.

It should be noted that although figs. 11 and 13 show the extension frame 82 being split into four individual elements, this should only be considered as one embodiment of many. For instance, the longest of the side extension plates 83 and end extension plates 84 may advantageously be split into at least two further frame segments, as this may result in improved options for how to place the frame segments inside the auxiliary unit in the transportation configuration.

Although the invention has been described above in connection with preferred embodiments of the invention, it will be evident for a person skilled in the art that several modifications are conceivable without departing from the invention as defined by the following claims.

### DEFINITIONS

Herein, the term "nacelle" means the generally accepted term describing the machine house for a wind turbine, i.e. that part which carries the rotor and drivetrain, and which is carried by the wind turbine tower.

The terms "main unit" and "auxiliary unit" herein refers to units which can be transported separately, and which can be assembled with one or more other units to form the nacelle.

Herein, the term "rotor-supporting assembly" refers to those parts of the nacelle which carries the rotor, typically a drivetrain, a main bearing and a main frame. The drivetrain may include different components depending on the type of wind turbine, e.g. a rotor shaft, the generator, and optionally a gearbox between the rotor shaft and the generator.

With the term "unit fixation structure" is to be understood any type of structure which can be used to connect the main unit and the auxiliary unit sufficiently for these to afterwards be handled like a single unit.

## Claims

1. A wind turbine nacelle (2) configured for mounting on a wind turbine tower (3) and housing a rotor-supporting assembly supporting a rotor, the nacelle further housing a power conversion assembly, the nacelle comprising:
- a main unit (20, 101) arranged to be connected to the wind turbine tower (3) and housing the rotor-supporting assembly, and
- at least one auxiliary unit (21, 22, 102) housing an operative component (34, 35, 104) forming part of the power conversion assembly,
wherein the main unit (20, 101) and the auxiliary unit (21, 22, 102) are separate units configured to be connected by a unit fixation structure at an interface, and
wherein the at least one auxiliary unit has a first height in an assembled configuration and a second height in a transportation configuration, the first height being higher than the second height.

2. The nacelle according to claim 1, wherein said at least one auxiliary unit (21, 22, 102) in the transportation configuration has the size and shape of a shipping freight container having structural specifications as provided by the ISO standard, ISO 668:2013 for series 1 freight containers.

3. The nacelle according to claim 1 or 2, wherein said at least one auxiliary unit (21, 22, 102) comprises
- a bottom face,
- four side faces (61) together defining a space, each of said four side faces (61) having an upper part (63) defining in combination a top perimeter; and
- a roof part (62),
wherein the roof part (62) in the transportation configuration is connected to at least part of said top perimeter in order to cover at least part of said space.

4. The nacelle according to any of claim 1-3, wherein, in the assembled configuration, a roof extension frame (82) is mounted between said top perimeter and said roof part (62); said roof extension frame (82) being dismounted in the transportation configuration.

5. The nacelle according to any of claim 1-4, wherein, in the assembled configuration, a roof extension frame (82) is mounted between said top perimeter and said bottom face; said roof extension frame (82) being dismounted in the transportation configuration.

6. The nacelle according to any of claim 1-5, wherein, in the transportation configuration, a roof extension frame (82) is positioned inside the auxiliary unit (21, 22, 102) in separate extension plates.

7. The nacelle according to any of claim 1-6, wherein said roof extension frame (82) comprises at least two side extension plates (83) and two end extension plates (84), and where at least two of these extension plates are welded or bolted together.

8. The nacelle according to any of claim 1-7, wherein each of said side extension plates (83) comprises at least two segments, such as at least three segments.

9. The nacelle according to any of claim 1-8, wherein said roof extension frame (82) has a height of at least 20cm, such as at least 40cm or at least 60cm.

10. The nacelle according to any of claim 1-9, wherein said nacelle comprises a main unit (20, 101) and at least two auxiliary units (21, 22, 102).

11. The nacelle according to any of claim 1-10, wherein the main unit (20, 101) and the at least one auxiliary unit (21, 22, 102) are arranged side by side in a direction away from a rotational axis defined by the rotor-supporting assembly.

12. The nacelle according to any of claim 1-11, wherein the operative component (34, 35, 104) is at least one of a power conversion assembly, a transformer, or a converter.

13. Installation method for the wind turbine nacelle according to any one of the preceding claims 1-12, the method comprising the steps of:
- providing a main unit (20, 101),
- providing at least one auxiliary unit (21, 22, 102),
- shifting the configuration of said at least one auxiliary unit (21, 22, 102) between a transportation configuration and an assembled configuration, and
- connecting the at least one auxiliary unit (21, 22, 102) to the main unit (20, 101).

14. Installation method according to claim 13, wherein said step of connecting the at least one auxiliary unit (21, 22, 102) to the main unit (20, 101) is after said step of shifting the configuration.

15. Installation method according to claims 13 or 14, wherein said step of connecting the at least one auxiliary unit (21, 22, 102) to the main unit (20, 101) is performed on-site.

16. Installation method according to any of claims 13-15, further comprising the step of moving extension plates (83, 84) of a roof extension frame (82) into or out from the at least one auxiliary unit (21, 22, 102).
